# EUROPÄISCHE PATENTSCHRIFT

(11) **EP 4 136 953 B1**
(45) Veröffentlichungstag und Bekanntmachung des Hinweises auf die Patenterteilung: **28.01.2026**
(21) Anmeldenummer: 21191790.1
(22) Anmeldetag: 17.08.2021
(51) Int. Cl.: A01D 34/00, B60K 35/10, B60K 35/22, B60K 35/28, B60K 35/80, G06F 3/147

(54) **AUTONOMER MOBILER OUTDOORBODENBEARBEITUNGSROBOTER**
AUTONOMOUS MOBILE OUTDOOR GROUND WORKING ROBOT
ROBOT DE TRAITEMENT DU SOL EXTÉRIEUR MOBILE AUTONOME

(43) Veröffentlichungstag der Anmeldung: 22.02.2023
(60) Teilanmeldung: 25226486.6
(73) Patentinhaber: Andreas Stihl AG & Co. KG, 71336 Waiblingen (DE)
(72) Erfinder: ULLRICH, Martin, 70736 Fellbach (DE); KELLER, Sven, 73663 Berglen (DE); FAILENSCHMID, Martin, 72829 Engstingen (DE); EBERHARTER, Jakob, 6020 Innsbruck (AT); WINTERGERST, Götz, 70374 Stuttgart (DE); MÜLLER, Philipp, 74706 Osterburken (DE); BELLATO, Alberto, 6094Axams (AT); DAUBERMANN, Julian, 70376 Stuttgart (DE)
(74) Vertreter: Patentanwälte Ruff, Wilhelm, Beier, Dauster & Partner mbB

(56) Entgegenhaltungen:
- EP-A1- 3 412 130
- EP-A1- 3 549 425
- DE-A1- 102011 000 816
- DE-A1- 102017 104 690

## Beschreibung

### ANWENDUNGSGEBIET UND STAND DER TECHNIK

Die Erfindung bezieht sich auf einen autonomen mobilen Outdoorbodenbearbeitungsroboter.

Die EP 3 412 130 A1 offenbart ein Rasenmähsystem aufweisend: eine Empfangseinheit, wobei die Empfangseinheit dazu ausgebildet ist, eine Vorhersage eines umweltzustandsbeschreibenden Parameters zu empfangen, einen autonomen mobilen Rasenmähroboter mit einem Schneidwerkzeug zum Mähen eines Rasens, wobei eine Schnitthöhe des Schneidwerkzeugs einstellbar ist, und eine Höhenverstelleinrichtung, wobei die Höhenverstelleinrichtung dazu ausgebildet ist, mit der Empfangseinheit zusammenzuwirken und die Schnitthöhe des Schneidwerkzeugs in Abhängigkeit von der empfangenen Vorhersage automatisch einzustellen. Das Rasenmähsystem, insbesondere der Rasenmähroboter, weist ein Ausgabegerät auf, wobei das Ausgabegerät dazu ausgebildet ist, die eingestellte Schnitthöhe des Schneidwerkzeugs und/oder den umweltzustandsbeschreibenden Parameter auszugeben.

Die DE 102011 000 816 A1 offenbart ein selbsttätig verfahrbares Gerät, insbesondere selbsttätig verfahrbares Bodenstaub-Aufsammelgerät, mit einem in der Außenfläche ausgebildeten Anzeigebereich, der eine Leuchtanzeige erbringt. Zur Verbesserung der Ausgestaltung insbesondere hinsichtlich der Anzeige wird vorgeschlagen, dass in Umfangsrichtung eine Mehrzahl von Anzeigebereichen nebeneinander ausgebildet sind und dass eine Ansteuerung der Anzeigebereiche vorgenommen ist, die zur Verdeutlichung eines Arbeitszustandes des Gerätes durch aufeinander folgende Aktivierung der Anzeigebereiche dienen.

Die DE 10 2017 104 690 A1 offenbart eine Anzeigevorrichtung für einen Robotstaubsauger. Die Anzeigevorrichtung weist zumindest eine Anzeigeeinrichtung auf, die dazu ausgebildet ist, um zumindest eine Fahrtrichtung des Robotstaubsaugers als eine Fahrtrichtungsanzeige für eine Person sichtbar anzuzeigen.

Die EP 3 549 425 A1 offenbart einen Rasenmäherroboter umfassend eine äußere Abdeckung, einen Innenkörper, der in der Außenabdeckung untergebracht ist, um mehrere Räder zum Fahren auf beiden Seiten davon zu montieren, eine Vielzahl von Messern, die drehbar an einer Bodenfläche des Innenkörpers montiert sind, um das Gras zu mähen, eine Vielzahl von Stützabschnitten, die in den Richtungen von vorne nach hinten und von links nach rechts an einem oberen Abschnitt des Innenkörpers angeordnet sind, um die äußere Abdeckung in den Richtungen von vorne nach hinten und von links nach rechts in Bezug auf den Innenkörper beweglich zu stützen, ein Ul-Modul, das an einem oberen Abschnitt des Innenkörpers montiert ist und mit einem Benutzerbedienfeld und einer Informationsanzeigeeinheit an einem oberen Abschnitt davon ausgestattet ist, und eine Ul-Staubabdeckung, die an einer Innenseite der Außenabdeckung angebracht ist, um zu verhindern, dass Staub innerhalb der Außenabdeckung in das Benutzerbedienfeld und die Informationsanzeigeeinheit eindringt, und so verhindert, dass Staub in das Ul-Modul eindringt.

### AUFGABE UND LÖSUNG

Der Erfindung liegt als Aufgabe die Bereitstellung eines autonomen mobilen Outdoorbodenbearbeitungsroboters zugrunde, der verbesserte Eigenschaften aufweist, insbesondere eine hohe Benutzerfreundlichkeit ermöglicht.

Die Erfindung löst diese Aufgabe durch die Bereitstellung eines autonomen mobilen Outdoorbodenbearbeitungsroboters mit den Merkmalen des Anspruchs 1. Vorteilhafte Weiterbildungen und/oder Ausgestaltungen der Erfindung sind in den abhängigen Ansprüchen beschrieben.

Der erfindungsgemäße autonome mobile Outdoorbodenbearbeitungsroboter weist eine mindestens oberseitige Außenkontur und eine Bildschirmeinrichtung auf. Die Außenkontur definiert bzw. weist in einer Draufsicht des Outdoorbodenbearbeitungsroboters eine Konturfläche auf. Die Bildschirmeinrichtung definiert bzw. weist, insbesondere in der Draufsicht des Outdoorbodenbearbeitungsroboters, eine Bildschirmfläche auf. Eine Größe der Bildschirmfläche, insbesondere in der Draufsicht des Outdoorbodenbearbeitungsroboters, ist bzw. nimmt mindestens 5 % (Prozent), insbesondere mindestens 7,5 %, einer Größe der Konturfläche ein.

Die Größe der Bildschirmfläche ermöglicht einem Benutzer des Outdoorbodenbearbeitungsroboters, insbesondere unter einem Busch und/oder im Freien und/oder in der Ferne, z.B. von einer Terrasse aus, die Bildschirmfläche gut sehen zu können. Somit ermöglicht dies eine hohe Benutzerfreundlichkeit.

Der Outdoorbodenbearbeitungsroboter kann ein Frei- bzw. Außen- und/oder Grünflächenbodenbearbeitungsroboter und/oder elektrisch sein.

Die Arbeitsfläche kann eine Freifläche, insbesondere ein unversiegelter Boden, oder eine Grünfläche sein, wie eine Wiese mit Rasen. Weiter zusätzlich kann die Arbeitsfläche eine Fläche mit Wegeplatten, Terrassenfließen und/oder Pflastersteinen sein.

Der Outdoorbodenbearbeitungsroboter, insbesondere ein Bearbeitungswerkzeug des Outdoorbodenbearbeitungsroboters, kann zur Bearbeitung bzw. zum Betrieb auf der Arbeitsfläche ausgebildet sein. Insbesondere kann das Bearbeitungswerkzeug ein Schneidwerkzeug aufweisen, insbesondere sein. Zusätzlich oder alternativ kann das Bearbeitungswerkzeug ein Reinigungswerkzeug, insbesondere eine Drahtbürste, aufweisen, insbesondere sein.

Der Outdoorbodenbearbeitungsroboter weist ein Fahrgestell, insbesondere aufweisend Laufräder, auf, insbesondere zu einer Fahrbewegung des Outdoorbodenbearbeitungsroboters auf der Arbeitsfläche. Insbesondere kann das Fahrgestell, insbesondere die Laufräder des Fahrgestells, eine Fahrebene aufweisen bzw. definieren. Insbesondere kann oberseitig auf einer der Fahrebene gegenüberliegenden Seite des Outdoorbodenbearbeitungsroboters bedeuten. Zusätzlich oder alternativ kann der Begriff "Fahrwerk" oder "Chassis" synonym für den Begriff "Fahrgestell" verwendet werden.

Die mindestens oberseitige Außenkontur kann eine mindestens oberseitige Abdeckung aufweisen bzw. durch die Abdeckung mindestens teilweise, insbesondere vollständig, gebildet sein. Zusätzlich kann die Abdeckung eine Abdeckungshaube sein und/oder einen Schutz des Outdoorbodenbearbeitungsroboters, insbesondere des Fahrgestells ermöglichen. Insbesondere kann der Begriff "Schutzhaube" synonym für den Begriff "Abdeckhaube" verwendet werden. Weiter zusätzlich oder alternativ kann die Außenkontur, insbesondere die Abdeckung, das Fahrgestell, mindestens teilweise, insbesondere vollständig, abdecken. Weiter zusätzlich oder alternativ können/kann die Außenkontur, insbesondere die Abdeckung, und/oder das Fahrgestell das Bearbeitungswerkzeug, mindestens teilweise, insbesondere vollständig, abdecken. Weiter zusätzlich oder alternativ kann das Bearbeitungswerkzeug unterhalb des Fahrgestells und/oder oberhalb der Arbeitsfläche und/oder der Fahrebene und/oder der Bodenfläche angeordnet sein.

Die Formulierung "den Outdoorbodenbearbeitungsroboter von oben betrachtet" oder "in einer Richtung orthogonal zu der Arbeitsfläche und/oder der Fahrebene und/oder der Bodenfläche" kann synonym für die Formulierung "in der Draufsicht des Outdoorbodenbearbeitungsroboters" verwendet werden.

Die Bildschirmeinrichtung kann, insbesondere mit ihrer Bildschirmfläche, nicht-orthogonal, insbesondere parallel, zu der Arbeitsfläche und/oder der Fahrebene und/oder der Bodenfläche und/oder der Konturfläche sein. Der Begriff "Displayeinrichtung" kann synonym für den Begriff "Bildschirmeinrichtung" verwendet werden.

Die Bildschirmfläche ist erfindungsgemäß an einer mindestens oberseitigen Oberfläche der Außenkontur. Erfindungsgemäß beträgt die Größe der Bildschirmfläche in der Draufsicht des Outdoorbearbeitungsroboters mindestens 5 %, insbesondere mindestens 7,5 %, der Größe der Konturfläche. Weiter zusätzlich kann die Größe der Bildschirmfläche maximal 100 %, insbesondere maximal 50 %, insbesondere maximal 25 %, der Größe der Konturfläche sein.

Der Begriff "Wert" kann synonym für den Begriff "Größe" verwendet werden.

Die Bildschirmeinrichtung weist zur Erzeugung einer optischen Ausgabe in der Bildschirmfläche mindestens eine Lichtquelle auf. Die mindestens eine Lichtquelle ist unterhalb der Außenkontur, insbesondere der Abdeckung, angeordnet. Die Bildschirmeinrichtung definiert bzw. weist die Bildschirmfläche an einer, insbesondere der, mindestens oberseitigen Oberfläche der Außenkontur, insbesondere der Abdeckung, auf. Die Außenkontur, insbesondere die Abdeckung, ist mindestens an der Bildschirmfläche, insbesondere mindestens teilweise oder vollständig, transparent oder transluzent. Dies ermöglicht dem Benutzer die Ausgabe durch die Außenkontur hindurch wahrnehmen zu können. Zusätzlich oder alternativ ermöglicht die Transluzenz eine Unsichtbarkeit mindestens der Lichtquelle, insbesondere bei keiner Erzeugung, und/oder eine Verminderung einer Erwärmung und/oder einen UV-Schutz der Bildschirmeinrichtung, insbesondere der mindestens eine Lichtquelle, insbesondere die und/oder der für einen robusten Betrieb der Bildschirmeinrichtung in dieser Größe im Freien, in der Regel unter direkter Sonneneinstrahlung, vorteilhaft sein kann. Insbesondere kann die Erzeugung automatisch sein. Zusätzlich oder alternativ kann der Begriff "visuell" synonym für den Begriff "optisch" verwendet werden. Weiter zusätzlich oder alternativ kann der Begriff "Darstellung" synonym für den Begriff "Ausgabe" verwendet werden. Weiter zusätzlich oder alternativ kann die Formulierung "eines Bilds" synonym für die Formulierung "einer optischen Ausgabe" verwendet werden. Weiter zusätzlich oder alternativ kann die Lichtquelle elektrisch sein. Weiter zusätzlich kann die mindestens eine Lichtquelle oberhalb der Arbeitsfläche und/oder der Fahrebene und/oder der Bodenfläche angeordnet sein. Weiter zusätzlich kann die mindestens eine Lichtquelle mindestens nach oben und/oder zu der Außenkontur, insbesondere der Abdeckung, strahlend ausgebildet sein.

Der Outdoorbodenbearbeitungsroboter weist einen Luftkühlkreislauf zur Luftkühlung der Bildschirmeinrichtung auf. Der Luftkühlkreislauf verläuft mindestens abschnittsweise, insbesondere vollständig, unterhalb der Bildschirmeinrichtung. Dies ermöglicht eine Wärmereduktion bzw. -abfuhr bzw. -ableitung, insbesondere die für einen robusten Betrieb der Bildschirmeinrichtung in dieser Größe im Freien, in der Regel unter direkter Sonneneinstrahlung, vorteilhaft sein kann. Insbesondere kann der Luftkühlkreislauf oberhalb der Arbeitsfläche und/oder der Fahrebene und/oder der Bodenfläche verlaufen.

Der Outdoorbodenbearbeitungsroboter weist ein Fahrgestell auf. Der Luftkühlkreislauf verläuft mindestens abschnittsweise, insbesondere vollständig, zwischen der Bildschirmeinrichtung und dem Fahrgestell bzw. ist dazwischen kanalisiert. Dies ermöglicht einen einfachen und/oder guten Schutz der Bildschirmeinrichtung vor äußeren Umwelteinflüssen, insbesondere Schmutz und/oder Wasser, insbesondere von unterhalb des Fahrgestells und/oder dem Bearbeitungswerkzeug. Insbesondere kann der Outdoorbodenbearbeitungsroboter, insbesondere der Luftkühlkreislauf, eine Luftöffnung vor, insbesondere und unterhalb, dem Fahrgestell und eine weitere Luftöffnung hinter, insbesondere und unterhalb, dem Fahrgestell aufweisen.

In einer Weiterbildung der Erfindung weist die Bildschirmeinrichtung zur Erzeugung der optischen

Ausgabe in der Bildschirmfläche die mindestens eine Ansteuerungs- bzw. Kontrollelektronik auf. Der Outdoorbodenbearbeitungsroboter weist eine Gehäuseschale auf. Die Gehäuseschale und die Außenkontur, insbesondere die Abdeckung, bilden, insbesondere gemeinsam, ein Bildschirmgehäuse. Die mindestens eine Lichtquelle und/oder die Ansteuerungselektronik sind/ist, insbesondere vollständig, in einem, insbesondere inneren, Aufnahmeraum des Bildschirmgehäuses angeordnet bzw. aufgenommen. Insbesondere sind die Außenkontur, insbesondere die Abdeckung, und die Gehäuseschale gegeneinander gedichtet, insbesondere mittels einer Dichtschnur. Dies ermöglicht einen einfachen und/oder guten Schutz der mindestens einen Lichtquelle und/oder der Ansteuerungselektronik vor äußeren Umwelteinflüssen, insbesondere Schmutz und/oder Wasser, insbesondere von außerhalb des Aufnahmeraums bzw. des Bildschirmgehäuses. Insbesondere kann die Erzeugung automatisch sein. Weiter zusätzlich kann die Ansteuerungselektronik zur, insbesondere automatischen, Ansteuerung bzw. Kontrolle der mindestens einen Lichtquelle ausgebildet sein. Die mindestens eine Lichtquelle und/oder die Ansteuerungselektronik und/oder die Gehäuseschale können/kann unterhalb der Außenkontur, insbesondere der Abdeckung, und/oder oberhalb der Arbeitsfläche und/oder der Fahrebene und/oder der Bodenfläche angeordnet sein. Weiter zusätzlich oder alternativ kann der Begriff "Behälter" oder "Wanne" synonym für den Begriff "Gehäuseschale" verwendet werden. Weiter zusätzlich oder alternativ kann der Begriff "Deckel" synonym für den Begriff "Außenkontur" verwendet werden. Weiter zusätzlich oder alternativ können/kann die Außenkontur, insbesondere die Abdeckung, und/oder die Gehäuseschale dicht sein, insbesondere für Wasser, insbesondere in einem flüssigen Aggregatzustand. Weiter zusätzlich oder alternativ können die Außenkontur, insbesondere die Abdeckung, und die Gehäuseschale gegeneinander gegen Wasser, insbesondere in einem flüssigen Aggregatzustand, gedichtet sein. Weiter zusätzlich oder alternativ kann die Dichtschnur eine, insbesondere endlos, umlaufende Dichtung sein.

Der Outdoorbodenbearbeitungsroboter weist ein, insbesondere das, Bildschirmgehäuse und eine Klimamembran auf. Die mindestens eine Lichtquelle und/oder die Ansteuerungselektronik sind/ist, insbesondere vollständig, in einem, insbesondere dem und/oder inneren, Aufnahmeraum des Bildschirmgehäuses angeordnet bzw. aufgenommen. Die Klimamembran ist für Wasserdampf aus dem Aufnahmeraum heraus und/oder einen Druckausgleich des Aufnahmeraums mit einer Umgebungsatmosphäre durchlässig. Dies ermöglicht einerseits die vorhergehend genannte/n Funktion/en und andererseits einen einfachen und/oder guten Schutz der mindestens einen Lichtquelle und/oder der Ansteuerungselektronik vor Wasser in einem flüssigen Aggregatzustand, insbesondere von außerhalb des Aufnahmeraums bzw. des Bildschirmgehäuses. Insbesondere kann die Klimamembran für Wasser in einem flüssigen Aggregatzustand in den Aufnahmeraum hinein undurchlässig bzw. sperrend sein. Zusätzlich oder alternativ kann der Begriff "Nässesperrmembran" synonym für den Begriff "Klimamembran" verwendet werden. Weiter zusätzlich oder alternativ kann die Umgebungsatmosphäre eine Umgebungsatmosphäre außerhalb des Aufnahmeraums bzw. des Bildschirmgehäuses sein.

Die Außenkontur, insbesondere die Abdeckung, ist entlang ihrer Oberfläche, insbesondere in alle Richtungen, an der Bildschirmfläche und/oder der mindestens einen Lichtquelle und/oder der Ansteuerungselektronik und/oder der Gehäuseschale und/oder dem Aufnahmeraum und über die Bildschirmfläche und/oder die mindestens eine Lichtquelle und/oder die Ansteuerungselektronik und/oder die Gehäuseschale und/oder den Aufnahmeraum, insbesondere mindestens 1 cm (Zentimeter), insbesondere mindestens 2 cm, hinaus grenzflächenfrei. Dies ermöglicht eine einfache und/oder gute Dichtung der Bildschirmeinrichtung und/oder, insbesondere somit, einen einfachen und/oder guten Schutz der Bildschirmeinrichtung, insbesondere der mindestens einen Lichtquelle und/oder der Ansteuerungselektronik, vor äußeren Umwelteinflüssen, insbesondere Schmutz und/oder Wasser, insbesondere von außerhalb des Aufnahmeraums bzw. des Bildschirmgehäuses. Insbesondere kann die Abdeckung ein Stück bzw. einstückig sein. Zusätzlich oder alternativ kann der Begriff "unterbrechungsfrei", "übergangsfrei", "durchgehend" oder "nicht abgesetzt" für den Begriff "grenzflächenfrei" verwendet werden. Weiter zusätzlich oder alternativ kann die Außenkontur, insbesondere die Abdeckung, bis zu ihrem Ende bzw. Rand und/oder maximal 50 cm, insbesondere maximal 25 cm, insbesondere maximal 10 cm, hinaus grenzflächenfrei sein.

In einer Weiterbildung der Erfindung weist der Outdoorbodenbearbeitungsroboter einen Kühlkörper zur Kühlung der Bildschirmeinrichtung, insbesondere der mindestens einen Lichtquelle und/oder der Ansteuerungselektronik, auf. Der Kühlkörper ist unterhalb der Bildschirmeinrichtung angeordnet. Insbesondere definiert bzw. weist der Kühlkörper eine Kühlkörperfläche auf. Eine Größe der Kühlkörperfläche in der Draufsicht des Outdoorbodenbearbeitungsroboters ist bzw. nimmt mindestens 2,5 %, insbesondere mindestens 5 %, insbesondere mindestens 7,5 %, der Größe der Konturfläche ein und/oder entspricht, insbesondere gleicht, der Größe der Bildschirmfläche. Dies ermöglicht eine, insbesondere passive, Wärmereduktion bzw. -abfuhr bzw. -ableitung, insbesondere die für einen robusten Betrieb der Bildschirmeinrichtung in dieser Größe im Freien, in der Regel unter direkter Sonneneinstrahlung, vorteilhaft sein kann. Insbesondere kann der Kühlkörper oberhalb der Arbeitsfläche und/oder der Fahrebene und/oder der Bodenfläche angeordnet sein. Zusätzlich oder alternativ kann die Größe der Kühlkörperfläche parallel zu der Arbeitsfläche und/oder der Fahrebene und/oder der Bodenfläche und/oder der Konturfläche mindestens 2,5 %, insbesondere mindestens 5 %, insbesondere mindestens 7,5 %, der Größe der Konturfläche sein und/oder der Größe der Bildschirmfläche entsprechen, insbesondere gleichen. Weiter zusätzlich oder alternativ kann die Größe der Kühlkörperfläche maximal 100 %, insbesondere maximal 50 %, insbesondere maximal 25 %, der Größe der Konturfläche sein. Weiter zusätzlich oder alternativ kann der Kühlkörper mindestens teilweise oder vollständig aus Aluminium bestehen. Weiter zusätzlich oder alternativ kann die Gehäuseschale den Kühlkörper aufweisen bzw. durch den Kühlkörper mindestens teilweise, insbesondere vollständig, gebildet sein.

In einer Weiterbildung der Erfindung weist die Außenkontur eine, insbesondere die, mindestens oberseitige Abdeckung auf. Der Outdoorbodenbearbeitungsroboter weist das Fahrgestell auf. Die Abdeckung ist in Bezug auf das Fahrgestell, insbesondere unmittelbar, beweglich gelagert. Insbesondere weist der Outdoorbodenbearbeitungsroboter eine Bewegungssensoreinrichtung auf. Die Bewegungssensoreinrichtung ist zur Erfassung einer Abdeckungsbewegung der Abdeckung in Bezug auf das Fahrgestell oder einer durch die Abdeckungsbewegung verursachten Bewegung ausgebildet. Insbesondere trägt der Kühlkörper einen Sensorteil, insbesondere einen Magneten, der Bewegungssensoreinrichtung. Dies ermöglicht eine Erfassung eines Hindernisses durch die Abdeckungsbewegung durch die Fahrbewegung, insbesondere in eine Fahrtrichtung, und einer, insbesondere unmittelbaren, Berührung der Abdeckung mit dem Hindernis. Insbesondere kann das Fahrgestell mindestens ein angetriebenes Laufrad und mindestens ein nicht-angetriebenes Laufrad zu der Fahrbewegung des Outdoorbodenbearbeitungsroboters, insbesondere auf der Arbeitsfläche, aufweisen. Mindestens das nicht-angetriebene Laufrad kann vor mindestens dem angetriebenen Laufrad in der Fahrtrichtung, insbesondere angeordnet, sein. Zusätzlich oder alternativ kann die Bewegungssensoreinrichtung elektrisch sein. Weiter zusätzlich oder alternativ kann die Erfassung automatisch sein. Weiter zusätzlich oder alternativ kann das Fahrgestell einen Hallsensor der Bewegungssensoreinrichtung tragen. Weiter zusätzlich oder alternativ kann der Outdoorbodenbearbeitungsroboter eine, insbesondere elektrische, Steuerungs- bzw. Kontrolleinrichtung zur, insbesondere automatischen, Steuerung bzw. Kontrolle einer Schutzfunktion des Outdoorbodenbearbeitungsroboters ausgelöst durch die erfasste Abdeckungsbewegung oder die erfasste Bewegung aufweisen. Dies ermöglicht die Steuerung der Schutzfunktion bei Berührung des Hindernisses. Insbesondere kann der Outdoorbodenbearbeitungsroboter ein, insbesondere elektrisches und/oder steuer- bzw. kontrollierbares, Werkzeug-System aufweisen. Das Werkzeug-System kann ein, insbesondere das, Bearbeitungswerkzeug aufweisen. Die Steuerungseinrichtung kann zur, insbesondere automatischen, Steuerung bzw. Kontrolle, insbesondere zur Deaktivierung bzw. zum Stoppen, des Werkzeug-Systems als die Schutzfunktion ausgebildet sein. Zusätzlich oder alternativ kann der Outdoorbodenbearbeitungsroboter ein, insbesondere elektrisches und/oder steuer- bzw. kontrollierbares, Fahr-System aufweisen. Das Fahr-System kann das Fahrgestell aufweisen. Die Steuerungseinrichtung kann zur, insbesondere automatischen, Steuerung bzw. Kontrolle, insbesondere zur Deaktivierung bzw. zum Stoppen, des Fahr-Systems als die Schutzfunktion ausgebildet sein. Weiter zusätzlich oder alternativ können/kann die Bewegungssensoreinrichtung und/oder die Steuerungseinrichtung eine Recheneinheit, insbesondere einen Prozessor, und/oder eine Speichereinheit aufweisen.

In einer Weiterbildung der Erfindung weist der Outdoorbodenbearbeitungsroboter den Luftkühlkreislauf zur Luftkühlung der mindestens einen Lichtquelle und/oder der Ansteuerungselektronik auf. Der Luftkühlkreislauf verläuft mindestens abschnittsweise, insbesondere vollständig, unterhalb der Gehäuseschale und/oder dem Aufnahmeraum und/oder dem Kühlkörper. Insbesondere kann der Kühlkörper mindestens teilweise, insbesondere vollständig, in dem Luftkühlkreislauf in Kontakt mit Luft des Luftkühlkreislaufs angeordnet sein und/oder mit der Bildschirmeinrichtung, insbesondere der mindestens einen Lichtquelle und/oder der Ansteuerungselektronik, in Kontakt sein.

In einer Ausgestaltung der Erfindung verläuft der Luftkühlkreislauf mindestens abschnittsweise, insbesondere vollständig, zwischen der Gehäuseschale und/oder dem Aufnahmeraum und/oder dem Kühlkörper und dem Fahrgestell bzw. ist dazwischen kanalisiert. Dies ermöglicht einen einfachen und/oder guten Schutz der Gehäuseschale, des Aufnahmeraums und/oder des Kühlkörpers vor äußeren Umwelteinflüssen, insbesondere Schmutz und/oder Wasser, insbesondere von unterhalb des Fahrgestells und/oder dem Bearbeitungswerkzeug.

In einer Weiterbildung der Erfindung weist der Outdoorbodenbearbeitungsroboter ein, insbesondere das, Bearbeitungswerkzeug auf. Das Bearbeitungswerkzeug weist ein Rasenmähwerkzeug auf, insbesondere ist das Rasenmähwerkzeug. Zusätzlich oder alternativ ist der Outdoorbodenbearbeitungsroboter als ein Rasenmähroboter ausgebildet. Insbesondere kann das Rasenmähwerkzeug zum Mähen der Arbeitsfläche ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn aufweisen. Weiter zusätzlich oder alternativ kann der Rasenmähroboter ein Mulchmähroboter sein.

In einer Weiterbildung der Erfindung weist der Outdoorbodenbearbeitungsroboter eine Temperatur- und/oder Bestrahlungsstärkesensoreinrichtung auf. Die Temperatur- und/oder Bestrahlungsstärkesensoreinrichtung ist zur Erfassung einer Temperaturgröße, insbesondere eines Werts der Temperaturgröße, der Bildschirmeinrichtung und/oder einer Bestrahlungsstärkegröße, insbesondere eines Werts der Bestrahlungsstärkegröße, in einer Umgebung, insbesondere Außenumgebung, des Outdoorbodenbearbeitungsroboters ausgebildet. Die Bildschirmeinrichtung weist eine, insbesondere die, Ansteuerungselektronik auf. Die Ansteuerungselektronik ist zur Ansteuerung bzw. Kontrolle einer Strahlungsleistung, insbesondere eines Werts der Strahlungsleistung, der Bildschirmeinrichtung in Abhängigkeit der erfassten Temperaturgröße und/oder der erfassten Bestrahlungsstärkegröße ausgebildet. Dies ermöglicht eine adaptive Strahlungsleitung, insbesondere zur Anhebung der Strahlungsleistung bei direkter Sonneneinstrahlung. Insbesondere kann der Begriff "Helligkeit" synonym für den Begriff "Bestrahlungsstärke" oder "Strahlungsleistung" verwendet werden. Zusätzlich oder alternativ kann die Temperatur- und/oder Bestrahlungsstärkesensoreinrichtung elektrisch sein. Weiter zusätzlich oder alternativ können/kann die Erfassung und/oder die Ansteuerung automatisch sein.

In einer Weiterbildung der Erfindung ist die Bildschirmeinrichtung zur optischen Ausgabe mindestens einer benutzerwahrnehmbaren Information, insbesondere eines Inhalts der Information, über mindestens einen Zustand, insbesondere einen Wert des Zustands, des Outdoorbodenbearbeitungsroboters ausgebildet. Insbesondere kann der Begriff "Signalisierung" oder "Anzeige" synonym für den Begriff "Ausgabe" verwendet werden.

In einer Weiterbildung der Erfindung weist die Bildschirmeinrichtung mindestens zehn mal mindestens zehn Bildschirmpixel, insbesondere jeweils mal mindestens drei Grundfarbsubpixel und/oder in einer Matrix angeordnet, auf. Dies ermöglicht die optische Ausgabe von einfachen Grafiken. Insbesondere können die Bildschirmpixel, insbesondere die Grundfarbpixel, einzeln ansteuerbar bzw. kontrollierbar sein. Zusätzlich oder alternativ können die mindestens drei Grundfarbsubpixel Rot (R), Grün (G) und Blau (B) sein.

In einer Weiterbildung der Erfindung weist die Bildschirmeinrichtung zur Erzeugung der optischen Ausgabe in der Bildschirmfläche mindestens zehn mal mindestens zehn Lichtquellen auf. Dies ermöglicht die optische Ausgabe von einfachen Grafiken. Insbesondere können die Lichtquellen einzeln ansteuerbar bzw. kontrollierbar und/oder elektrisch sein. Zusätzlich oder alternativ können die mindestens zehn mal mindestens zehn Lichtquellen, insbesondere in der Draufsicht des Outdoorbodenbearbeitungsroboters, eine Einrichtungsfläche aufweisen bzw. definieren. Eine Größe der Einrichtungsfläche, insbesondere in der Draufsicht des Outdoorbodenbearbeitungsroboters, kann mindestens 5 %, insbesondere mindestens 7,5 %, der Größe der Konturfläche sein bzw. einnehmen und/oder der Größe der Bildschirmfläche entsprechen, insbesondere gleichen. Zusätzlich oder alternativ kann die Größe der Einrichtungsfläche parallel zu der Arbeitsfläche und/oder der Fahrebene und/oder der Bodenfläche und/oder der Konturfläche mindestens 5 %, insbesondere mindestens 7,5 %, der Größe der Konturfläche sein und/oder der Größe der Bildschirmfläche entsprechen, insbesondere gleichen. Weiter zusätzlich oder alternativ kann die Größe der Einrichtungsfläche maximal 100 %, insbesondere maximal 50 %, insbesondere maximal 25 %, der Größe der Konturfläche sein.

In einer Weiterbildung der Erfindung weist die Bildschirmeinrichtung zur Erzeugung der optischen Ausgabe in der Bildschirmfläche die mindestens eine Lichtquelle in Form mindestens einer Leuchtdiode, insbesondere einer RGB-Leuchtdiode, auf.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Draufsicht eines erfindungsgemäßen autonomen mobilen Outdoorbodenbearbeitungsroboters aufweisend eine Bildschirmeinrichtung sichtbar gemacht,
- Fig. 2: eine Seitenansicht von links des Outdoorbodenbearbeitungsroboters der Fig. 1,
- Fig. 3: eine geschnittene Seitenansicht von links des Outdoorbodenbearbeitungsroboters der Fig. 1,
- Fig. 4: eine Perspektivansicht von vorne links oben des Outdoorbodenbearbeitungsroboters der Fig. 1,
- Fig. 5: eine geschnittene Perspektivansicht von vorne links oben des Outdoorbodenbearbeitungsroboters der Fig. 1,
- Fig. 6: eine Untersicht unter anderem einer Abdeckung des Outdoorbodenbearbeitungsroboters der Fig. 1,
- Fig. 7: eine Perspektivansicht von vorne links oben der Abdeckung des Outdoorbodenbearbeitungsroboters der Fig. 1 aufweisend die Bildschirmeinrichtung sichtbar gemacht,
- Fig. 8: eine Perspektivansicht von vorne rechts unten unter anderem der Abdeckung des Outdoorbodenbearbeitungsroboters der Fig. 1, und
- Fig. 9: Perspektivansichten von vorne rechts oben des Outdoorbodenbearbeitungsroboters der Fig. 1 aufweisend die Bildschirmeinrichtung optisch ausgebend verschiedene benutzerwahrnehmbare Informationen über verschiedene Zustände des Outdoorbodenbearbeitungsroboters.

### DETAILLIERTE BESCHREIBUNG DER AUSFÜHRUNGSBEISPIELE

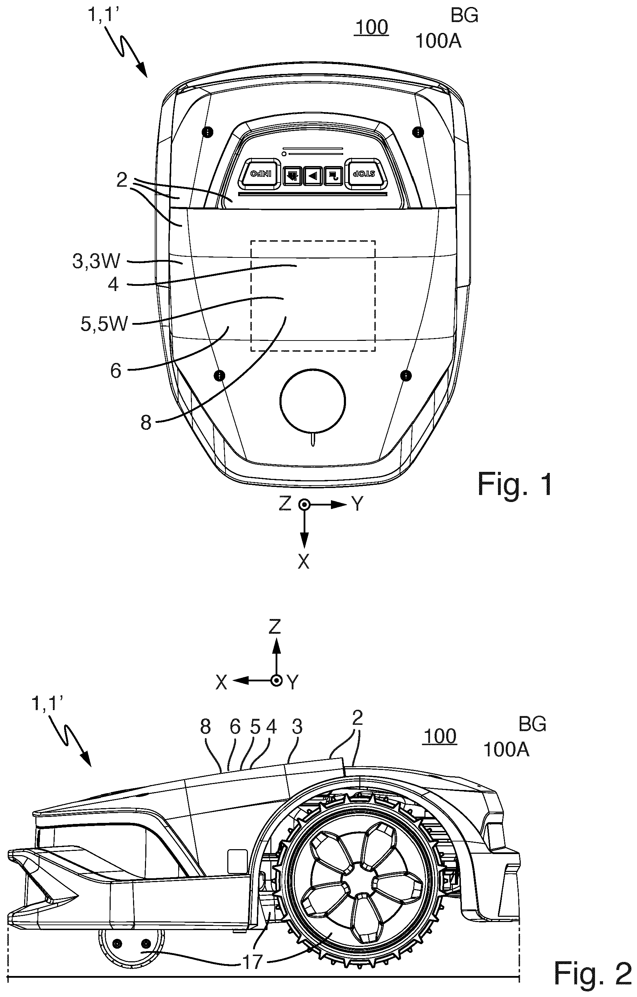

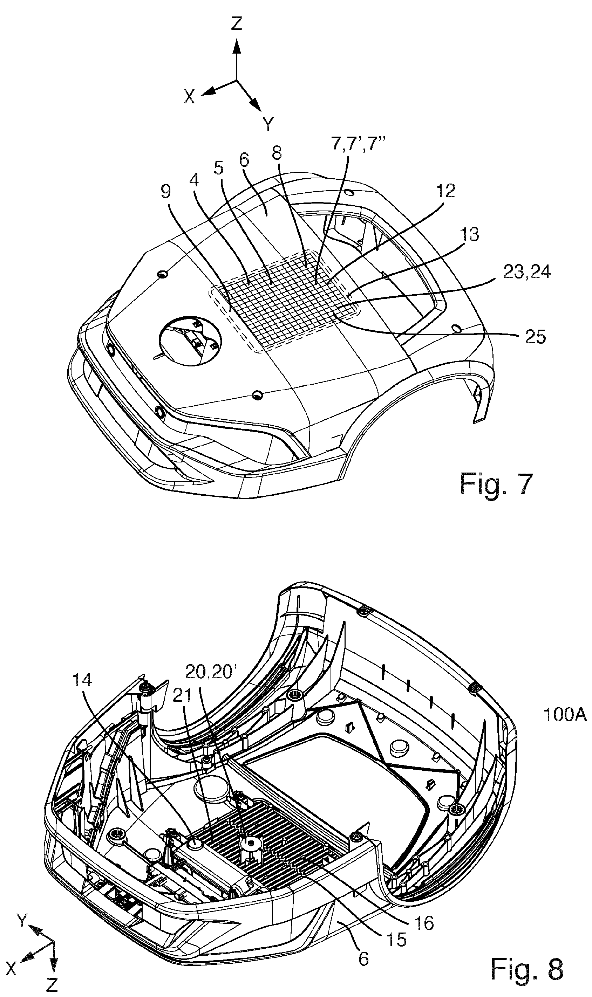

Fig. 1 bis 5 und 9 zeigen einen erfindungsgemäßen autonomen mobilen Outdoorbodenbearbeitungsroboter 1. Der Outdoorbodenbearbeitungsroboter 1 weist eine mindestens oberseitige Außenkontur 2 und eine Bildschirmeinrichtung 4 auf, wie in Fig. 7 gezeigt. Die Außenkontur 2 weist in einer Draufsicht des Outdoorbodenbearbeitungsroboters 1 bzw. den Outdoorbodenbearbeitungsroboter 1 von oben betrachtet oder in einer, insbesondere vertikalen, Richtung -z orthogonal zu einer Arbeitsfläche und/oder einer Fahrebene und/oder einer Bodenfläche des Outdoorbodenbearbeitungsroboters eine Konturfläche 3 auf. Die Bildschirmeinrichtung 4 weist eine Bildschirmfläche 5 auf. Eine Größe 5W der Bildschirmfläche 5 in der Draufsicht des Outdoorbodenbearbeitungsroboters 1 ist mindestens 5 %, in dem gezeigten Ausführungsbeispiel mindestens 7,5 %, einer Größe 3W der Konturfläche 3, wie in Fig. 1 gezeigt.

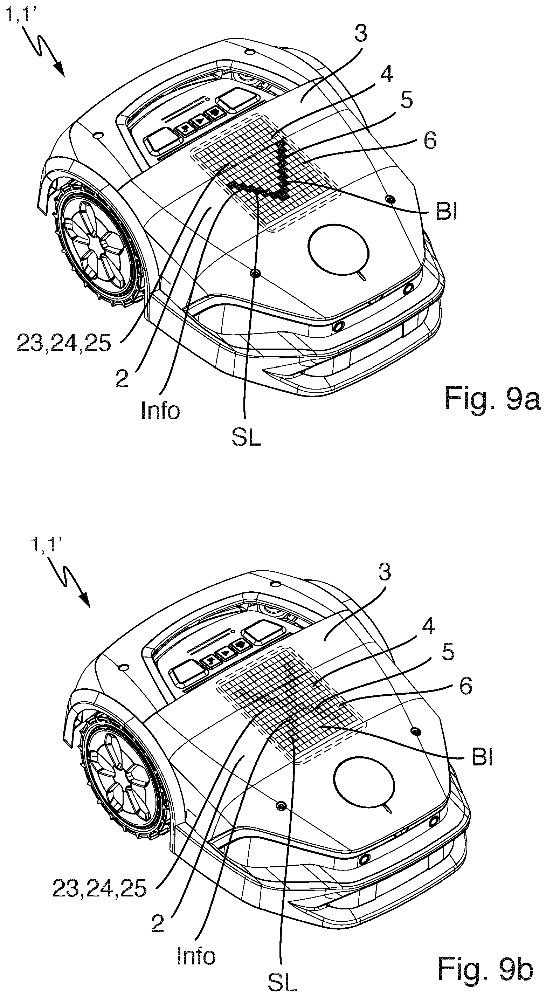

Im Detail weist die Bildschirmeinrichtung 4 zur Erzeugung einer optischen Ausgabe BI in der Bildschirmfläche 5 mindestens eine Lichtquelle 7 auf, insbesondere die erzeugt, wie in Fig. 7 und 9 gezeigt. Die mindestens eine Lichtquelle 7 ist, insbesondere in der Richtung -z, unterhalb der Außenkontur 2 angeordnet. Die Bildschirmeinrichtung 4 weist die Bildschirmfläche 5 an einer mindestens oberseitigen Oberfläche 8 der Außenkontur 2 auf. Die Außenkontur 2 ist mindestens an der Bildschirmfläche 5 in dem gezeigten Ausführungsbeispiel transluzent oder in alternativen Ausführungsbeispielen transparent.

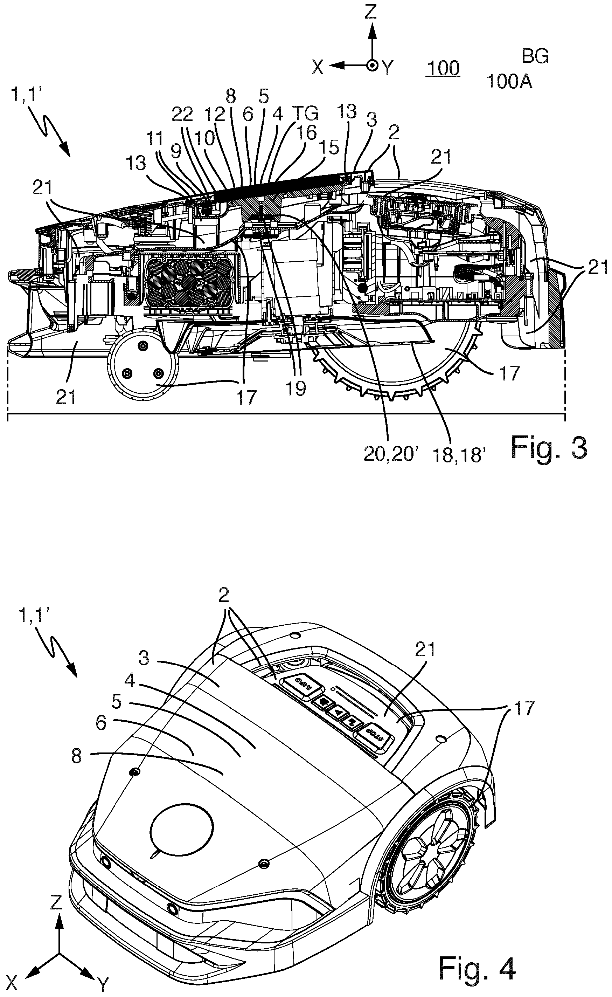

Des Weiteren weist die Bildschirmeinrichtung 4 zur Erzeugung der optischen Ausgabe BI in der Bildschirmfläche 5 die mindestens eine Lichtquelle 7 auf. Zusätzlich kann die Bildschirmeinrichtung eine Ansteuerungselektronik 9 aufweisen, wie in Fig. 3, 5 und 7 gezeigt.

Zusätzlich weist der Outdoorbodenbearbeitungsroboter 1 eine Gehäuseschale 10 auf. Die Gehäuseschale 10 und die Außenkontur 2 bilden ein Bildschirmgehäuse 11. Die mindestens eine Lichtquelle 7 und/oder die Ansteuerungselektronik 9 sind/ist in einem Aufnahmeraum 12 des Bildschirmgehäuses 11 angeordnet. In dem gezeigten Ausführungsbeispiel sind die Außenkontur 2 und die Gehäuseschale 10 gegeneinander gedichtet, in dem gezeigten Ausführungsbeispiel mittels einer Dichtschnur 13.

Insbesondere ist die Dichtschnur 13 in eine, insbesondere endlos, umlaufende Nut in der Gehäuseschale 10 eingelegt.

Zusätzlich oder alternativ weist der Outdoorbodenbearbeitungsroboter 1 das Bildschirmgehäuse 11 und eine Klimamembran 14 auf. Die mindestens eine Lichtquelle 7 und/oder die Ansteuerungselektronik 9 sind/ist in dem Aufnahmeraum 12 des Bildschirmgehäuses 11 angeordnet. Die Klimamembran 14 ist für Wasserdampf aus dem Aufnahmeraum 12 heraus und/oder einen Druckausgleich des Aufnahmeraums 12 mit einer Umgebungsatmosphäre 100A durchlässig.

Außerdem weist die Bildschirmeinrichtung 4 die Bildschirmfläche an der mindestens oberseitigen Oberfläche 8 der Außenkontur 2 auf. Die Außenkontur 2 ist entlang ihrer Oberfläche 8, insbesondere in eine, insbesondere horizontale, Richtung x und/oder eine, insbesondere horizontale, Richtung y, insbesondere jeweils orthogonal zu der Richtung z, an der Bildschirmfläche 5 und/oder der mindestens einen Lichtquelle 7 und/oder der Ansteuerungselektronik 9 und/oder der Gehäuseschale 10 und/oder dem Aufnahmeraum 12 und über die Bildschirmfläche 5 und/oder die mindestens eine Lichtquelle 7 und/oder die Ansteuerungselektronik 9 und/oder die Gehäuseschale 10 und/oder den Aufnahmeraum 12, in dem gezeigten Ausführungsbeispiel mindestens 1 cm, hinaus grenzflächenfrei.

Weiter weist der Outdoorbodenbearbeitungsroboter 1 einen Kühlkörper 15 zur Kühlung der Bildschirmeinrichtung 4, insbesondere der mindestens einen Lichtquelle 7 und/oder der Ansteuerungselektronik 9, auf, insbesondere kühlt, wie in Fig. 3, 5, 6 und 8 gezeigt. Der Kühlkörper 15 ist, insbesondere in der Richtung -z, unterhalb der Bildschirmeinrichtung 4 angeordnet. In dem gezeigten Ausführungsbeispiel weist der Kühlkörper 15 eine Kühlkörperfläche 16 auf. Eine Größe 16W der Kühlkörperfläche 16 in der Draufsicht des Outdoorbodenbearbeitungsroboters 1 ist mindestens 2,5 %, insbesondere mindestens 5 %, in dem gezeigten Ausführungsbeispiel mindestens 7,5 %, der Größe 3W der Konturfläche 3 und/oder entspricht, in dem gezeigten Ausführungsbeispiel gleicht, der Größe 5W der Bildschirmfläche 5.

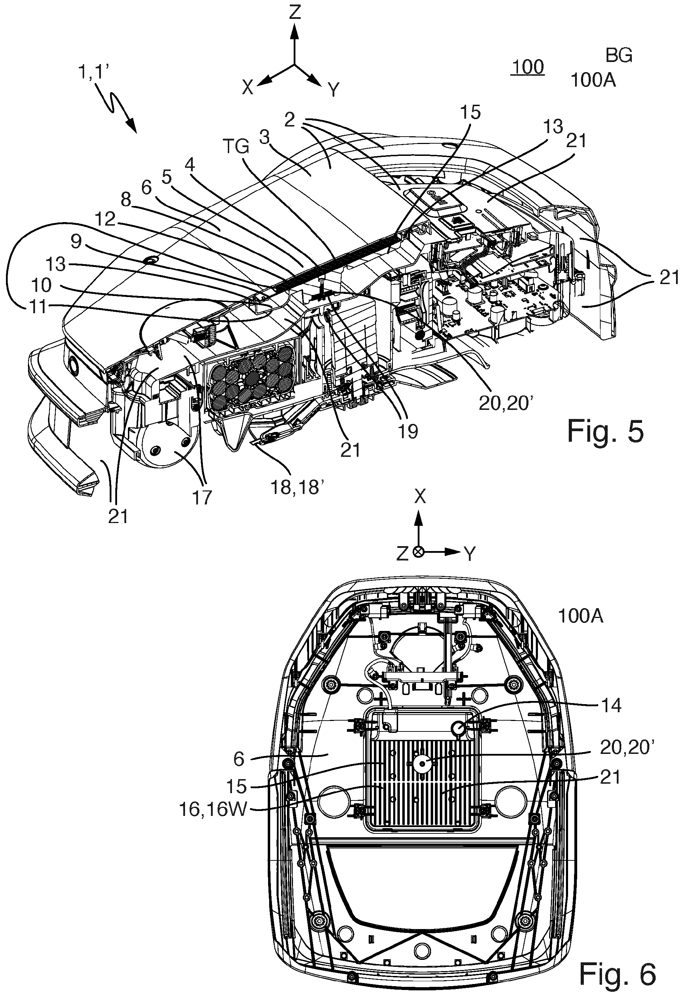

Zudem weist die Außenkontur 2 eine mindestens oberseitige Abdeckung 6 auf. Der Outdoorbodenbearbeitungsroboter 1 weist ein Fahrgestell 17 auf. Die Abdeckung 6 ist in Bezug auf das Fahrgestell 17 beweglich gelagert. In dem gezeigten Ausführungsbeispiel weist der Outdoorbodenbearbeitungsroboter 1 eine Bewegungssensoreinrichtung 19 auf, wie in Fig. 3 und 5 gezeigt. Die Bewegungssensoreinrichtung 19 ist zur Erfassung einer Abdeckungsbewegung der Abdeckung 6 in Bezug auf das Fahrgestell 17 oder einer durch die Abdeckungsbewegung verursachten Bewegung ausgebildet, insbesondere erfasst. In dem gezeigten Ausführungsbeispiel trägt der Kühlkörper 15 einen Sensorteil 20, in dem gezeigten Ausführungsbeispiel einen Magneten 20', der Bewegungssensoreinrichtung 19, wie in Fig. 3, 5, 6 und 8 gezeigt.

Des Weiteren weist der Outdoorbodenbearbeitungsroboter 1 einen Luftkühlkreislauf 21 zur Luftkühlung der Bildschirmeinrichtung 4, insbesondere der mindestens einen Lichtquelle 7 und/oder der Ansteuerungselektronik 9, auf, insbesondere kühlt, wie in Fig. 3 bis 6 und 8 gezeigt. Der Luftkühlkreislauf 21 verläuft mindestens abschnittsweise, insbesondere in der Richtung -z, unterhalb der Bildschirmeinrichtung 4, in dem gezeigten Ausführungsbeispiel der Gehäuseschale 10 und/oder dem Aufnahmeraum 12 und/oder dem Kühlkörper 15.

Im Detail weist der Outdoorbodenbearbeitungsroboter 1 das Fahrgestell 17 auf. Der Luftkühlkreislauf 21 verläuft mindestens abschnittsweise zwischen der Bildschirmeinrichtung 4, insbesondere der Gehäuseschale 10 und/oder dem Aufnahmeraum 12 und/oder dem Kühlkörper 15, und dem Fahrgestell 17.

Außerdem weist der Outdoorbodenbearbeitungsroboter 1 ein Bearbeitungswerkzeug 18 auf, wie in Fig. 3 und 5 gezeigt. Das Bearbeitungswerkzeug 18 weist ein Rasenmähwerkzeug 18' auf. Zusätzlich oder alternativ ist der Outdoorbodenbearbeitungsroboter 1 als ein Rasenmähroboter 1' ausgebildet.

Weiter weist der Outdoorbodenbearbeitungsroboter 1 eine Temperatur- und/oder Bestrahlungsstärkesensoreinrichtung 22 auf, wie in Fig. 3 und 5 gezeigt. Die Temperatur- und/oder Bestrahlungsstärkesensoreinrichtung 22 ist zur Erfassung einer Temperaturgröße TG der Bildschirmeinrichtung 4 und/oder einer Bestrahlungsstärkegröße BG in einer Umgebung 100 des Outdoorbodenbearbeitungsroboters 1 ausgebildet, insbesondere erfasst. Die Bildschirmeinrichtung 4 weist die Ansteuerungselektronik 9 auf. Die Ansteuerungselektronik 9 ist zur Ansteuerung einer Strahlungsleistung SL der Bildschirmeinrichtung in Abhängigkeit der erfassten Temperaturgröße TG und/oder der erfassten Bestrahlungsstärkegröße BG ausgebildet, insbesondere steuert an, wie in Fig. 9 gezeigt.

Zudem ist die Bildschirmeinrichtung 4 zur optischen Ausgabe mindestens einer benutzerwahrnehmbaren Information Info über mindestens einen Zustand des Outdoorbodenbearbeitungsroboters 1 ausgebildet, insbesondere gibt aus, z.B. in Fig. 9 a) den Zustand "betriebsbereit" und in Fig. 9 b) den Zustand "nicht betriebsbereit" bzw. "Fehler".

Des Weiteren weist die Bildschirmeinrichtung 4 mindestens zehn mal mindestens zehn, in dem gezeigten Ausführungsbeispiel sechzehn mal sechzehn, Bildschirmpixel 23, in dem gezeigten Ausführungsbeispiel jeweils mal mindestens drei Grundfarbsubpixel 24 und/oder in einer Matrix 25 angeordnet, auf, wie in Fig. 7 und 9 gezeigt.

Außerdem weist die Bildschirmeinrichtung 4 zur Erzeugung der optischen Ausgabe BI in der Bildschirmfläche 5 mindestens zehn mal mindestens zehn, in dem gezeigten Ausführungsbeispiel sechzehn mal sechzehn, Lichtquellen 7 auf.

Weiter weist die Bildschirmeinrichtung 4 zur Erzeugung der optischen Ausgabe BI in der Bildschirmfläche 5 die mindestens eine Lichtquelle 7 in Form mindestens einer Leuchtdiode 7', in dem gezeigten Ausführungsbeispiel einer RGB-Leuchtdiode 7", auf.

Im Übrigen weist die Bildschirmeinrichtung 4 mindestens einen Reflektor auf, insbesondere für die mindestens eine Lichtquelle 7.

Zusätzlich oder alternativ weist die Bildschirmeinrichtung 4 eine, insbesondere ebene, Leiterplatte auf, insbesondere welche die mindestens eine Lichtquelle 7 und/oder die Ansteuerungselektronik 9 trägt.

Weiter zusätzlich oder alternativ weist die Bildschirmeinrichtung 4 ein Wärmeleitpad auf, insbesondere für die mindestens eine Lichtquelle 7 und/oder die Ansteuerungselektronik 9.

Weiter zusätzlich oder alternativ kann der Outdoorbodenbearbeitungsroboter mindestens eine weitere Bildschirmeinrichtung, insbesondere in Form eines "Front Stripe" und/oder eines "Back Stripe", aufweisen.

Weiter zusätzlich oder alternativ kann der Outdoorbodenbearbeitungsroboter mittels eines Begrenzungsdrahts und/oder drahtlos, insbesondere mittels eines GNSS, navigieren.

Weiter zusätzlich oder alternativ kann der Outdoorbodenbearbeitungsroboter eine Kameraeinrichtung und/oder eine Ultraschalleinrichtung zur Erfassung eines Hindernisses aufweisen.

In dem gezeigten Ausführungsbeispiel ist die Konturfläche 3 330027 mm² (Quadratmillimeter). Zusätzlich oder alternativ ist die Bildschirmfläche 5 25077 mm². Weiter zusätzlich oder alternativ ist die Bildschirmfläche 5 in einer Mitte der Konturfläche 3, insbesondere der Mitte näher als einem Ende bzw. Rand der Konturfläche 3. Weiter zusätzlich oder alternativ kann die Bildschirmeinrichtung 4 als zentrale LED-Matrix bezeichnet werden.

Wie die gezeigten und oben erläuterten Ausführungsbeispiele deutlich machen, stellt die Erfindung einen vorteilhaften autonomen mobilen Outdoorbodenbearbeitungsroboter bereit, der verbesserte Eigenschaften aufweist, insbesondere eine hohe Benutzerfreundlichkeit ermöglicht.

## Patentansprüche

1. Autonomer mobiler Outdoorbodenbearbeitungsroboter (1), wobei der Outdoorbodenbearbeitungsroboter (1) aufweist:
- eine mindestens oberseitige Außenkontur (2), wobei die Außenkontur (2) in einer Draufsicht des Outdoorbodenbearbeitungsroboters (1) eine Konturfläche (3) aufweist, und
- eine Bildschirmeinrichtung (4), wobei die Bildschirmeinrichtung (4) eine Bildschirmfläche (5) aufweist,
- wobei eine Größe (5W) der Bildschirmfläche (5) in der Draufsicht des Outdoorbodenbearbeitungsroboters (1) mindestens 5 % einer Größe (3W) der Konturfläche (3) ist,
- wobei die Bildschirmeinrichtung (4) zur Erzeugung einer optischen Ausgabe (BI) in der Bildschirmfläche (5) mindestens eine Lichtquelle (7) aufweist, wobei die mindestens eine Lichtquelle (7) unterhalb der Außenkontur (2) angeordnet ist,
- wobei die Bildschirmeinrichtung (4) die Bildschirmfläche (5) an einer mindestens oberseitigen Oberfläche (8) der Außenkontur (2) aufweist, und
- wobei die Außenkontur (2) mindestens an der Bildschirmfläche (5) transparent oder transluzent ist,
- wobei der Outdoorbodenbearbeitungsroboter (1) einen Luftkühlkreislauf (21) zur Luftkühlung der Bildschirmeinrichtung (4) aufweist,
- wobei der Luftkühlkreislauf (21) mindestens abschnittsweise unterhalb der Bildschirmeinrichtung (4) verläuft, und
- wobei der Outdoorbodenbearbeitungsroboter (1) ein Fahrgestell (17) aufweist,
- wobei der Luftkühlkreislauf (21) mindestens abschnittsweise zwischen der Bildschirmeinrichtung (4) und dem Fahrgestell (17) verläuft.

2. Outdoorbodenbearbeitungsroboter (1) nach dem vorhergehenden Anspruch,
- wobei die Bildschirmeinrichtung (4) zur Erzeugung der optischen Ausgabe (BI) in der Bildschirmfläche (5) die mindestens eine Lichtquelle (7) und/oder eine Ansteuerungselektronik (9) aufweist, und
- wobei der Outdoorbodenbearbeitungsroboter (1) eine Gehäuseschale (10) aufweist,
- wobei die Gehäuseschale (10) und die Außenkontur (2) ein Bildschirmgehäuse (11) bilden,
- wobei die mindestens eine Lichtquelle (7) und/oder die Ansteuerungselektronik (9) in einem Aufnahmeraum (12) des Bildschirmgehäuses (11) angeordnet sind/ist,
- insbesondere und wobei die Außenkontur (2) und die Gehäuseschale (10) gegeneinander gedichtet sind, insbesondere mittels einer Dichtschnur (13).

3. Outdoorbodenbearbeitungsroboter (1) nach einem der vorhergehenden Ansprüche,
- wobei die Bildschirmeinrichtung (4) zur Erzeugung der optischen Ausgabe (BI) in der Bildschirmfläche (5) die mindestens eine Lichtquelle (7) und/oder eine Ansteuerungselektronik (9) aufweist, und
- wobei der Outdoorbodenbearbeitungsroboter (1) ein Bildschirmgehäuse (11) und eine Klimamembran (14) aufweist,
- wobei die mindestens eine Lichtquelle (7) und/oder die Ansteuerungselektronik (9) in einem Aufnahmeraum (12) des Bildschirmgehäuses (11) angeordnet sind/ist, und
- wobei die Klimamembran (14) für Wasserdampf aus dem Aufnahmeraum (12) heraus und/oder einen Druckausgleich des Aufnahmeraums (12) mit einer Umgebungsatmosphäre (100A) durchlässig ist.

4. Outdoorbodenbearbeitungsroboter (1) nach einem der vorhergehenden Ansprüche,
- wobei die Bildschirmeinrichtung (4) die Bildschirmfläche (5) an einer mindestens oberseitigen Oberfläche (8) der Außenkontur (2) aufweist, und
- wobei die Außenkontur (2) entlang ihrer Oberfläche (8) an der Bildschirmfläche (5) und/oder der mindestens einen Lichtquelle (7) und/oder der Ansteuerungselektronik (9) und/oder der Gehäuseschale (10) und/oder dem Aufnahmeraum (12) und über die Bildschirmfläche (5) und/oder die mindestens eine Lichtquelle (7) und/oder die Ansteuerungselektronik (9) und/oder die Gehäuseschale (10) und/oder den Aufnahmeraum (12), insbesondere mindestens 1 cm, hinaus grenzflächenfrei ist.

5. Outdoorbodenbearbeitungsroboter (1) nach einem der vorhergehenden Ansprüche,
- wobei der Outdoorbodenbearbeitungsroboter (1) einen Kühlkörper (15) zur Kühlung der Bildschirmeinrichtung (4), insbesondere der mindestens einen Lichtquelle (7) und/oder der Ansteuerungselektronik (9), aufweist, wobei der Kühlkörper (15) unterhalb der Bildschirmeinrichtung (4) angeordnet ist,
- insbesondere und wobei der Kühlkörper (15) eine Kühlkörperfläche (16) aufweist, wobei eine Größe (16W) der Kühlkörperfläche (16) in der Draufsicht des Outdoorbodenbearbeitungsroboters (1) mindestens 2,5 %, insbesondere mindestens 5 %, der Größe (3W) der Konturfläche (3) ist und/oder der Größe (5W) der Bildschirmfläche (5) entspricht, insbesondere gleicht.

6. Outdoorbodenbearbeitungsroboter (1) nach einem der vorhergehenden Ansprüche,
- wobei die Außenkontur (2) eine mindestens oberseitige Abdeckung (6) aufweist, und
- wobei der Outdoorbodenbearbeitungsroboter (1) das Fahrgestell (17) aufweist,
- wobei die Abdeckung (6) in Bezug auf das Fahrgestell (17) beweglich gelagert ist,
- insbesondere und wobei der Outdoorbodenbearbeitungsroboter (1) eine Bewegungssensoreinrichtung (19) aufweist, wobei die Bewegungssensoreinrichtung (19) zur Erfassung einer Abdeckungsbewegung der Abdeckung (6) in Bezug auf das Fahrgestell (17) oder einer durch die Abdeckungsbewegung verursachten Bewegung ausgebildet ist,
insbesondere und wobei der Kühlkörper (15) einen Sensorteil (20), insbesondere einen Magneten (20'), der Bewegungssensoreinrichtung (19) trägt.

7. Outdoorbodenbearbeitungsroboter (1) nach einem der Ansprüche 2 bis 6,
- wobei der Outdoorbodenbearbeitungsroboter (1) den Luftkühlkreislauf (21) zur Luftkühlung der mindestens einen Lichtquelle (7) und/oder der Ansteuerungselektronik (9) aufweist, und/oder
- wobei der Luftkühlkreislauf (21) mindestens abschnittsweise unterhalb der Gehäuseschale (10) und/oder dem Aufnahmeraum (12) und/oder dem Kühlkörper (15) verläuft.

8. Outdoorbodenbearbeitungsroboter (1) nach dem vorhergehenden Anspruch,
- wobei der Luftkühlkreislauf (21) mindestens abschnittsweise zwischen der Gehäuseschale (10) und/oder dem Aufnahmeraum (12) und/oder dem Kühlkörper (15) und dem Fahrgestell (17) verläuft.

9. Outdoorbodenbearbeitungsroboter (1) nach einem der vorhergehenden Ansprüche,
- wobei der Outdoorbodenbearbeitungsroboter (1) ein Bearbeitungswerkzeug (18) aufweist, wobei das Bearbeitungswerkzeug (18) ein Rasenmähwerkzeug (18') aufweist, und/oder
- wobei der Outdoorbodenbearbeitungsroboter (1) als ein Rasenmähroboter (1') ausgebildet ist.

10. Outdoorbodenbearbeitungsroboter (1) nach einem der vorhergehenden Ansprüche,
- wobei der Outdoorbodenbearbeitungsroboter (1) eine Temperatur- und/oder Bestrahlungsstärkesensoreinrichtung (22) aufweist, wobei die Temperatur- und/oder Bestrahlungsstärkesensoreinrichtung (22) zur Erfassung einer Temperaturgröße (TG) der Bildschirmeinrichtung (4) und/oder einer Bestrahlungsstärkegröße (BG) in einer Umgebung (100) des Outdoorbodenbearbeitungsroboters (1) ausgebildet ist, und
- wobei die Bildschirmeinrichtung (4) eine Ansteuerungselektronik (9) aufweist, wobei die Ansteuerungselektronik (9) zur Ansteuerung einer Strahlungsleistung (SL) der Bildschirmeinrichtung (4) in Abhängigkeit der erfassten Temperaturgröße (TG) und/oder der erfassten Bestrahlungsstärkegröße (BG) ausgebildet ist.

11. Outdoorbodenbearbeitungsroboter (1) nach einem der vorhergehenden Ansprüche, wobei die Bildschirmeinrichtung (4) zur optischen Ausgabe mindestens einer benutzerwahrnehmbaren Information (Info) über mindestens einen Zustand des Outdoorbodenbearbeitungsroboters (1) ausgebildet ist.

12. Outdoorbodenbearbeitungsroboter (1) nach einem der vorhergehenden Ansprüche,
- wobei die Bildschirmeinrichtung (4) mindestens zehn mal mindestens zehn Bildschirmpixel (23), insbesondere jeweils mal mindestens drei Grundfarbsubpixel (24) und/oder in einer Matrix (25) angeordnet, aufweist.

13. Outdoorbodenbearbeitungsroboter (1) nach einem der vorhergehenden Ansprüche,
- wobei die Bildschirmeinrichtung (4) zur Erzeugung der optischen Ausgabe (BI) in der Bildschirmfläche (5) mindestens zehn mal mindestens zehn Lichtquellen (7) aufweist.

14. Outdoorbodenbearbeitungsroboter (1) nach einem der vorhergehenden Ansprüche,
- wobei die Bildschirmeinrichtung (4) zur Erzeugung der optischen Ausgabe (BI) in der Bildschirmfläche (5) die mindestens eine Lichtquelle (7) in Form mindestens einer Leuchtdiode (7'), insbesondere einer RGB-Leuchtdiode (7"), aufweist.

## Claims

1. Autonomous mobile outdoor ground treatment robot (1), the outdoor ground treatment robot (1) comprising:
- an at least upper-side outer contour (2), the outer contour (2) comprising a contour face (3) in a plan view of the outdoor ground treatment robot (1), and
- a display screen device (4), the display screen device (4) comprising a display screen face (5),
- wherein a size (5W) of the display screen face (5) in the plan view of the outdoor ground treatment robot (1) is at least 5% of a size (3W) of the contour face (3),
- wherein the display screen device (4) comprises at least one light source (7) for generating an optical output (BI) in the display screen face (5), the at least one light source (7) being arranged below the outer contour (2),
- wherein the display screen device (4) comprises the display screen face (5) on an at least upper-side surface (8) of the outer contour (2), and
- wherein the outer contour (2) is transparent or translucent at least on the display screen face (5),
- wherein the outdoor ground treatment robot (1) comprises an air cooling circuit (21) for air-cooling the display screen device (4),
- wherein the air cooling circuit (21) extends at least in sections below the display screen device (4), and
- wherein the outdoor ground treatment robot (1) comprises a chassis frame (17),
- wherein the air cooling circuit (21) extends at least in sections between the display screen device (4) and the chassis frame (17).

2. Outdoor ground treatment robot (1) according to the preceding claim,
- wherein the display screen device (4) comprises the at least one light source (7) and/or a driver electronics (9) for generating the optical output (BI) in the display screen face (5), and
- wherein the outdoor ground treatment robot (1) comprises a housing shell (10),
- wherein the housing shell (10) and the outer contour (2) form a display screen housing (11),
- wherein the at least one light source (7) and/or the driver electronics (9) is/are arranged in a compartment (12) of the display screen housing (11),
- and in particular wherein the outer contour (2) and the housing shell (10) are sealed from one another, in particular by means of a sealing cord (13).

3. Outdoor ground treatment robot (1) according to one of the preceding claims,
- wherein the display screen device (4) comprises the at least one light source (7) and/or a driver electronics (9) for generating the optical output (BI) in the display screen face (5), and
- wherein the outdoor ground treatment robot (1) comprises a display screen housing (11) and a climate membrane (14),
- wherein the at least one light source (7) and/or the driver electronics (9) is/are arranged in a compartment (12) of the display screen housing (11), and
- wherein the climate membrane (14) is permeable for water vapour from the compartment (12) and/or a pressure equilibration of the compartment (12) with an ambient atmosphere (100A).

4. Outdoor ground treatment robot (1) according to one of the preceding claims,
- wherein the display screen device (4) comprises the display screen face (5) on an at least upper-side surface (8) of the outer contour (2), and
- wherein the outer contour (2) is interface-free along its surface (8) on the display screen face (5) and/or the at least one light source (7) and/or the driver electronics (9) and/or the housing shell (10) and/or the compartment (12) and beyond the display screen face (5) and/or the at least one light source (7) and/or the driver electronics (9) and/or the housing shell (10) and/or the compartment (12), in particular to at least 1 cm.

5. Outdoor ground treatment robot (1) according to one of the preceding claims,
- wherein the outdoor ground treatment robot (1) comprises a heat sink (15) for cooling the display screen device (4), in particular the at least one light source (7) and/or the driver electronics (9), the heat sink (15) being arranged below the display screen device (4),
- and in particular wherein the heat sink (15) comprises a heat sink face (16), a size (16W) of the heat sink face (16) in the plan view of the outdoor ground treatment robot (1) being at least 2.5%, in particular at least 5% of the size (3W) of the contour face (3) and/or corresponding, in particular being equal, to the size (5W) of the display screen face (5).

6. Outdoor ground treatment robot (1) according to one of the preceding claims,
- wherein the outer contour (2) comprises an at least upper-side cover (6), and
- wherein the outdoor ground treatment robot (1) comprises the chassis frame (17),
- wherein the cover (6) is mounted movably in relation to the chassis frame (17),
- and in particular wherein the outdoor ground treatment robot (1) comprises a movement sensor device (19), the movement sensor device (19) being configured to detect a cover movement of the cover (6) in relation to the chassis frame (17) or a movement caused by the cover movement,
- and in particular wherein the heat sink (15) carries a sensor part (20), in particular a magnet (20'), of the movement sensor device (19).

7. Outdoor ground treatment robot (1) according to one of the claims 2 to 6,
- wherein the outdoor ground treatment robot (1) comprises the air cooling circuit (21) for air-cooling the at least one light source (7) and/or the driver electronics (9), and/or
- wherein the air cooling circuit (21) extends at least in sections below the housing shell (10) and/or the compartment (12) and/or the heat sink (15).

8. Outdoor ground treatment robot (1) according to the preceding claim,
- wherein the air cooling circuit (21) extends at least in sections between the housing shell (10) and/or the compartment (12) and/or the heat sink (15) and the chassis frame (17).

9. Outdoor ground treatment robot (1) according to one of the preceding claims,
- wherein the outdoor ground treatment robot (1) comprises a treatment tool (18), the treatment tool (18) comprising a lawn mowing tool (18'), and/or
- wherein the outdoor ground treatment robot (1) is configured as a lawnmower robot (1').

10. Outdoor ground treatment robot (1) according to one of the preceding claims,
- wherein the outdoor ground treatment robot (1) comprises a temperature and/or irradiance sensor device (22), the temperature and/or irradiance sensor device (22) being configured to detect a temperature quantity (TG) of the display screen device (4) and/or an irradiance quantity (BG) in an environment (100) of the outdoor ground treatment robot (1), and
- wherein the display screen device (4) comprises a driver electronics (9), the driver electronics (9) being configured for driving a radiant power (SL) of the display screen device (4) as a function of the detected temperature quantity (TG) and/or of the detected irradiance quantity (BG).

11. Outdoor ground treatment robot (1) according to one of the preceding claims,
- wherein the display screen device (4) is configured for optical output of at least one user-perceptible information item (Info) relating about to at least one state of the outdoor ground treatment robot (1).

12. Outdoor ground treatment robot (1) according to one of the preceding claims,
- wherein the display screen device (4) comprises at least ten by at least ten display screen pixels (23), in particular respectively by at least three primary colour subpixels (24) and/or arranged in a matrix (25).

13. Outdoor ground treatment robot (1) according to one of the preceding claims,
- wherein the display screen device (4) comprises at least ten by at least ten light sources (7) for generating the optical output (BI) in the display screen face (5).

14. Outdoor ground treatment robot (1) according to one of the preceding claims,
- wherein the display screen device (4) comprises the at least one light source (7) in the form of at least one light-emitting diode (7'), in particular an RGB light-emitting diode (7"), for generating the optical output (BI) in the display screen face (5).

## Revendications

1. Robot mobile autonome (1) pour le traitement d'un sol en extérieur, le robot (1) pour le traitement d'un sol en extérieur comprenant :
- au moins un contour extérieur (2) de côté supérieur, le contour extérieur (2) présentant, dans une vue en plan du robot (1) pour le traitement d'un sol en extérieur, une surface de contour (3), et
- un dispositif (4) formant écran d'affichage, le dispositif (4) formant écran d'affichage présentant une surface d'affichage (5),
- une taille (5W) de la surface d'affichage (5) dans la vue en plan du robot (1) pour le traitement d'un sol en extérieur représentant au moins 5 % d'une taille (3W) de la surface de contour (3),
- le dispositif (4) formant écran d'affichage présentant au moins une source de lumière (7) pour générer une sortie optique (BI) dans la surface d'affichage (5), ladite au moins une source de lumière (7) étant agencée en dessous du contour extérieur (2),
- le dispositif (4) formant écran d'affichage présentant la surface d'affichage (5) sur au moins une surface (8) de côté supérieur du contour extérieur (2), et
- le contour extérieur (2) étant transparent ou translucide au moins au niveau de la surface d'affichage (5),
- le robot (1) pour le traitement d'un sol en extérieur présentant un circuit (21) de refroidissement par air pour refroidir par air le dispositif (4) formant écran d'affichage,
- le circuit (21) de refroidissement par air s'étendant au moins partiellement sous le dispositif (4) formant écran d'affichage, et
- le robot (1) pour le traitement d'un sol en extérieur présentant un châssis (17),
- le circuit (21) de refroidissement par air s'étendant au moins partiellement entre le dispositif (4) formant écran d'affichage et le châssis (17).

2. Robot (1) pour le traitement d'un sol en extérieur selon la revendication précédente,
- dans lequel le dispositif (4) formant écran d'affichage destiné à générer la sortie optique (BI) dans la surface d'affichage (5) présente ladite au moins une source de lumière (7) et/ou un système électronique de commande (9), et
- dans lequel le robot (1) pour le traitement d'un sol en extérieur présente une coque de boîtier (10),
- la coque de boîtier (10) et le contour extérieur (2) formant un boîtier (11) d'écran d'affichage,
- ladite au moins une source de lumière (7) et/ou le système électronique de commande (9) étant agencé(s) dans un espace de réception (12) du boîtier (11) d'écran d'affichage,
- en particulier dans lequel le contour extérieur (2) et la coque de boîtier (10) sont rendus étanches l'un par rapport à l'autre, en particulier au moyen d'un cordon d'étanchéité (13).

3. Robot (1) pour le traitement d'un sol en extérieur selon l'une des revendications précédentes,
- dans lequel le dispositif (4) formant écran d'affichage destiné à générer la sortie optique (BI) dans la surface d'affichage (5) présente ladite au moins une source de lumière (7) et/ou un système électronique de commande (9), et
- dans lequel le robot (1) pour le traitement d'un sol en extérieur présente un boîtier (11) d'écran d'affichage et une membrane climatique (14),
- ladite au moins une source de lumière (7) et/ou le système électronique de commande (9) étant agencés dans un espace de réception (12) du boîtier (11) d'écran d'affichage, et
- la membrane climatique (14) étant perméable à la vapeur d'eau provenant de l'espace de réception (12) et/ou permettant une compensation de pression entre l'espace de réception (12) et l'atmosphère ambiante (100A).

4. Robot (1) pour le traitement d'un sol en extérieur selon l'une des revendications précédentes,
- le dispositif (4) formant écran d'affichage présentant la surface d'affichage (5) sur au moins une surface (8) de côté supérieur du contour extérieur (2), et
- dans lequel le contour extérieur (2) s'étend sans interruption en particulier sur au moins 1 cm le long de sa surface (8) au niveau de la surface d'affichage (5) et/ou de ladite au moins une source de lumière (7) et/ou de l'électronique de commande (9) et/ou de la coque de boîtier (10) et/ou de l'espace de réception (12) et au-dessus de la surface d'écran (5) et/ou ladite au moins une source de lumière (7) et/ou l'électronique de commande (9) et/ou la coque du boîtier (10) et/ou l'espace de réception (12).

5. Robot (1) pour le traitement d'un sol en extérieur selon l'une des revendications précédentes,
- le robot (1) pour le traitement d'un sol en extérieur présentant un dissipateur thermique (15) pour refroidir le dispositif (4) formant écran d'affichage, en particulier ladite au moins une source de lumière (7) et/ou l'électronique de commande (9), le dissipateur thermique (15) étant agencé sous le dispositif (4) formant écran d'affichage,
- en particulier, le dissipateur thermique (15) présentant une surface de dissipation thermique (16), une taille (16W) de la surface de dissipation thermique (16) dans la vue en plan du robot (1) pour le traitement d'un sol en extérieur correspondant à au moins 2,5 %, en particulier au moins 5 %, de la taille (3W) de la surface de contour (3) et/ou de la taille (5W) de la surface d'écran (5), en particulier étant égale à celle-ci.

6. Robot (1) pour le traitement d'un sol en extérieur selon l'une des revendications précédentes,
- dans lequel le contour extérieur (2) présente un capot (6) au moins sur le côté supérieur, et
- dans lequel le robot (1) pour le traitement d'un sol en extérieur présente le châssis (17),
- le capot (6) étant monté de manière mobile par rapport au châssis (17),
- en particulier et dans lequel le robot (1) pour le traitement d'un sol en extérieur présente un dispositif capteur de mouvement (19), le dispositif capteur de mouvement (19) étant conçu pour détecter un mouvement de capot du capot (6) par rapport au châssis (17) ou un mouvement provoqué par le mouvement du capote,
en particulier et dans lequel le dissipateur thermique (15) porte une partie capteur (20), en particulier un aimant (20'), du dispositif capteur de mouvement (19).

7. Robot (1) pour le traitement d'un sol en extérieur selon l'une des revendications 2 à 6,
- le robot (1) pour le traitement d'un sol en extérieur présentant le circuit (21) de refroidissement par air pour refroidir par air ladite au moins une source de lumière (7) et/ou l'électronique de commande (9), et/ou
- le circuit (21) de refroidissement par air s'étendant au moins partiellement sous la coque de boîtier (10) et/ou l'espace de réception (12) et/ou le dissipateur thermique (15).

8. Robot (1) pour le traitement d'un sol en extérieur selon la revendication précédente,
- dans lequel le circuit (21) de refroidissement par air s'étend au moins partiellement entre la coque de boîtier (10) et/ou l'espace de réception (12) et/ou le dissipateur thermique (15) et le châssis (17).

9. Robot (1) pour le traitement d'un sol en extérieur selon l'une des revendications précédentes,
- le robot de traitement en extérieur (1) présentant un outil de travail (18), l'outil de travail (18) présentant un outil de tonte de gazon (18'), et/ou
- le robot (1) pour le traitement d'un sol en extérieur étant conçu sous la forme d'un robot de tonte de gazon (1').

10. Robot (1) pour le traitement d'un sol en extérieur selon l'une des revendications précédentes,
- le robot (1) pour le traitement d'un sol en extérieur présentant un dispositif de détection de température et/ou d'intensité d'éclairement (22), le dispositif de détection de température et/ou d'intensité de rayonnement (22) étant conçu pour détecter une valeur de température (TG) du dispositif (4) formant écran d'affichage et/ou une valeur d'intensité de rayonnement (BG) dans un environnement (100) du robot (1) pour le traitement d'un sol en extérieur, et
- dans lequel le dispositif (4) formant écran d'affichage comprend un système électronique de commande (9), le système électronique de commande (9) étant conçu pour commander une puissance d'éclairement (SL) du dispositif (4) formant écran d'affichage en fonction de la valeur de température (TG) détectée et/ou de la valeur d'intensité de rayonnement (BG) détectée.

11. Robot (1) pour le traitement d'un sol en extérieur selon l'une des revendications précédentes,
dans lequel le dispositif (4) formant écran d'affichage est conçu pour la sortie optique d'au moins une information (Info) perceptible par l'utilisateur concernant au moins un état du robot (1) pour le traitement d'un sol en extérieur.

12. Robot (1) pour le traitement d'un sol en extérieur selon l'une des revendications précédentes,
- dans lequel le dispositif (4) formant écran d'affichage présente au moins dix fois au moins dix pixels d'écran (23), en particulier chacun à au moins trois sous-pixels de couleur primaire (24) et/ou agencés selon une matrice (25).

13. Robot (1) pour le traitement d'un sol en extérieur selon l'une des revendications précédentes,
- dans lequel le dispositif (4) formant écran d'affichage présente, pour générer la sortie optique (BI) dans la surface d'affichage (5), au moins dix fois au moins dix sources de lumière (7).

14. Robot (1) pour le traitement d'un sol en extérieur selon l'une des revendications précédentes,
- dans lequel le dispositif (4) formant écran d'affichage destiné à générer la sortie optique (BI) dans la surface d'affichage (5) comprend ladite au moins une source de lumière (7) sous la forme d'au moins une diode électroluminescente (7'), en particulier une diode électroluminescente RVB (7").
